# EUROPEAN PATENT APPLICATION

(11) **EP 1 521 011 A1**
(43) Date of publication of application: **06.04.2005**
(21) Application number: 04256095.3
(22) Date of filing: 01.10.2004
(51) Int. Cl.: F16F 15/131

(54) **Twin mass flywheel**

(30) Priority: 03.10.2003 GB 0323148
(71) Applicant: Automotive Products Driveline Technology Limited, Leamington Spa, Warwickshire CV31 3ER (GB)
(72) Inventor: Curtis, Anthony John, Leamington Spa, Warwickshire CV31 1RU (GB); Struvé, Benjamin, Leamington Spa, Warwickshire CV31 1JJ (GB)
(74) Representative: Moffat, John Andrew

(57) **Abstract**

A twin mass flywheel will often have a clutch mechanism on the output flywheel mass. Satisfactory operation of the clutch depends on a number of factors including the axial stiffness of the flywheel. A twin mass flywheel is disclosed, characterised in that the flywheel is further provided with support means (56,56') to resist axial deflection of an inner diameter portion of the output flywheel (12) in a direction towards the input flywheel (11) in order to provide a twin mass flywheel of the type specified having increased axial stiffness.

## Description

This invention relates to twin mass flywheels, hereinafter referred to as of the type specified, which include an input mass for connection with a vehicle engine and an output mass for connection with a vehicle drive line, the input and output masses being relatively rotatable against the action of a damping means acting between the input and output masses to absorb/attenuate torsional vibrations emanating from the engine, a radially inwardly extending flange secured to an outer peripheral portion of the input mass and an axially extending support hub secured to an inner peripheral portion of the flange, the output mass being supported by bearing means from the hub.

A twin mass flywheel of the type specified will often have a clutch mechanism on the output flywheel mass. In a typical arrangement such as that disclosed in International patent application WO 03/040588, the clutch mechanism will comprise a pressure plate and a diaphragm spring for clamping a clutch driven plate between the pressure plate and the output mass. Satisfactory operation of the clutch depends on a number of factors including the axial stiffness of the flywheel.

It is an objective of the present invention to provide a twin mass flywheel of the type specified having increased axial stiffness.

Thus according to the present invention, there is provided a twin mass flywheel of the type specified, characterised in that the flywheel is further provided with support means to resist axial deflection of an inner diameter portion of the output flywheel in a direction towards the input flywheel.

The support means may be adapted to resist axial deflection of the hub in a direction towards the input flywheel.

The support means may be adapted to be located axially between a portion of the hub or another component fixed axially relative to the hub, and the input flywheel or a component fixed axially relative to the input flywheel.

The support means may be located axially between the hub and the input flywheel.

Alternatively, the support means may be adapted to be located axially between the hub, or a component fixed relative to the hub, and a crankshaft of an associated engine to which the flywheel is to be fitted.

The support means may comprise an annular support member or prop.

The support means may be configured so as to be subjected to a compression loading at least some of the time during use.

The support means may be manufactured from metal, such as steel, or from a plastics material or a combination thereof.

The support means can be provided as an extension of a component of the flywheel, such as the hub or the input mass. Alternatively or additionally, the support means can be provided by means of an extension of a component of an associated engine to which the flywheel is attached. In one such embodiment, the support means is provided as an extension to the crankshaft of an associated engine to which the flywheel is attached.

The present invention will now be described, by way of example only, with reference to the accompanying drawings in which:-
Figure 1 is an axial section through a twin mass flywheel embodying the present invention;
Figure 2 is a view in the direction of arrow 2-2 of Figure 1;
Figure 3 is an enlarged view of one half of the twin mass flywheel of Figure 1, but omitting details of an associated clutch;
Figure 4 is a view similar to that of Figure 3 but showing a first alternative embodiment of a twin mass flywheel embodying the present invention;
Figure 5 is a view similar to that of Figure 3 but showing a further alternative embodiment of a twin mass flywheel embodying the present invention;
Figure 6 is a view of a drive member of the twin mass flywheel of Figure 5, taken in the direction of arrow X;
Figure 7 is a view similar to that of Figure 3 but showing a yet further alternative embodiment of a twin mass flywheel embodying the present invention; and
Figures 8a and 8b show side views of a flange assembly for use in the present invention.

Referring to the drawings, the twin mass flywheel 10 comprises an input mass 11 and an output mass 12 which are relatively rotatable through a small angular range against a torsional vibration damper 13.

The output mass 12 is supported from the input mass 11 via a plain bearing 14, which is supported on an axially extending hub 15. Hub 15 is itself mounted on a radially inwardly extending flange 16 whose outer peripheral portion 17 is mounted on the outer peripheral portion 18 of input mass 11 via fastening means in the form of bolts 19.

In the present embodiment, the hub 15 comprises two hub members 15A, 15B each having a generally L-shaped form. The first hub member 15A has an axially extending flange portion 20 that extends to the right (as viewed) within the inner diameter of the output mass 12 and carries the plain bearing 14. A radially extending flange 21 of the first hub member 15A is received in a recess or cutout 22 in an inner diameter portion 23 of the flange 16. A radial flange 24 of the second hub member overlies the radial flange portion 21 of the first hub member 15A and is fastened to the flange 16 by means of rivets 25. The radial flange 21 of the first hub portion 15A is rigidly sandwiched between the inner diameter portion 23 of the flange 16 and the radial flange portion 24 of the second hub member 15B. An axially extending flange portion 26 of the second hub member 15B extends in the direction of the input flywheel mass 11 (towards the left as viewed) and forms part of a friction damping device 27 to be described in more detail later.

Whilst in the present embodiment the hub 15 comprises two separate hub members 15A and 15B, it will be appreciated by those skilled in the art that the hub 15 could be produced as single a unitary component. It will also be appreciated that the hub need not be riveted to the flange 16 but could be attached to the flange by any suitable means such as bolts or by welding.

The torsional vibration damper 13 comprises two pairs of compression springs 28 which are housed in a first series of windows 29 in flange 16 and a second series of windows 30 formed in side plates 31 and 32 positioned on either side of flange 16 and secured to the output mass 12 via spacing rivets 33.

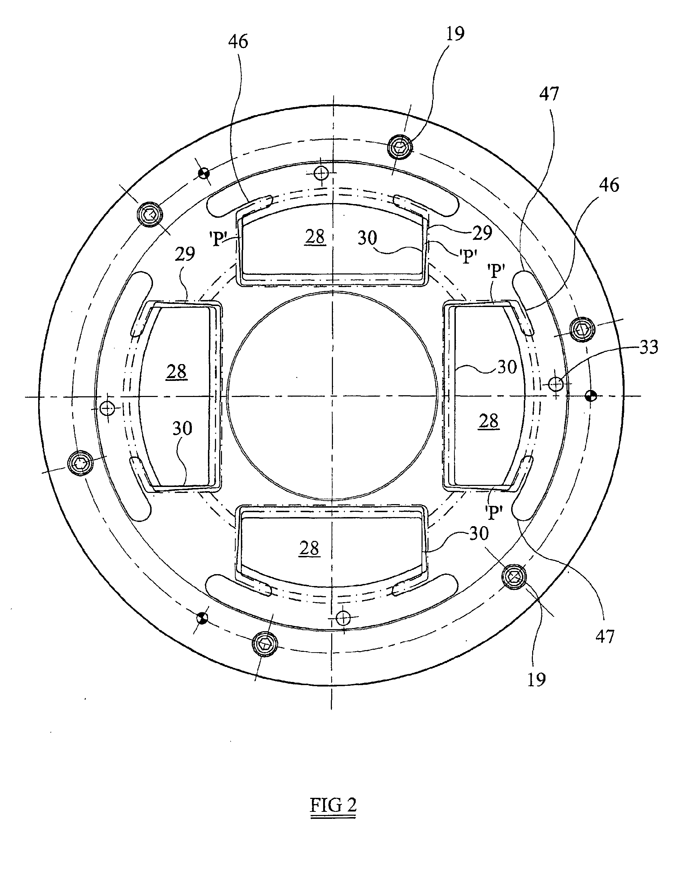

As can be seen from Figure 2, the compression springs 28 are a tight fit in their co-operating windows 30 in the side plates 31 and 32 but have a small circumferential clearance 'p' at their ends in their windows 29 in flange 16. Thus the damping springs 28 do not operate until a given amount of relative rotation has taken place between the input and output masses of the twin mass flywheel. This amount of relative rotation is typically ± 3 degrees. However, it should be appreciated that the amount of clearance can be varied to suit the requirements of the vehicular application of the flywheel and can be omitted altogether if required.

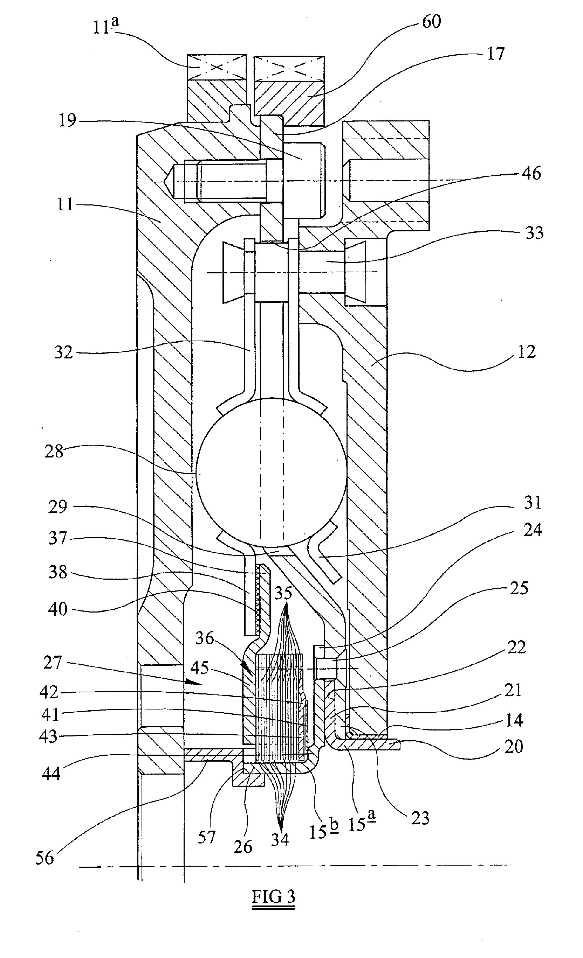

The relative rotation of the input and output masses is also subject to frictional damping by the friction damping means 27. As shown in figure 3, this frictional damping means comprises a first set of friction plates 34 which are splined onto the second hub portion 15B for rotation with the input mass 11, and a second series of friction plates 35 which are splined onto a drive member 36 which is in turn drivingly connected with one of the side plates 32 of the damper 13 for rotation with the output mass 12. In order to drivingly connect the drive member 36 with the side plate 32, the drive member 36 has a radially extending flange portion 37 that overlaps a corresponding flange portion 38 on side plate 32. The flange portion 37 of the drive member 36 and the flange portion 38 of the side plate 32 are bonded together by a layer of elastomer 40 such that the drive member 36 rotates with the side plate 32 and the output mass 12.

The two series of interleaved friction plates 34 and 35 are axially loaded by a Belleville spring 41 whose outer periphery reacts against a stepped portion 42 of an annular pressure plate 43 arranged on the right hand side (as viewed) of the interleaved friction plates 34 and 35 and whose inner edge reacts against axially stepped portion 44 on the second hub member 15B. Diaphragm spring 41 biases the pressure plate 43 towards a radially extending back plate portion 45 of the drive member 36 hence compressing the interleaved friction plates 34 and 35 to give the desired frictional damping upon relative rotation of the input and output flywheel masses. The pressure plate 43 is also splined to the second hub member 15B for rotation with the input mass.

The friction plates 34 and 35 may be steel plates and in a particularly advantageous embodiment are surface treated with NITROTEC (RTM). It has been found that use of a NITROTEC (RTM) surface treatment such as NQ16, available from TTI Group, not only provides good wear resistance but also results in a very stable level of hysteresis over the life of the friction damper.

Diaphragm spring 41 is arranged to have a generally flat load/deflection characteristic over its operating range and is supported so that it can act on either side of its flat condition as disclosed and claimed in UK patent application 0124246.0 (published as WO 03/031840 A1). This ensures that spring 41 applies a substantially constant axial force throughout its entire operating range and life.

The splining of the first and second series of interleaved friction plates 34 and 35 relative to on the one hand the second hub member 15B and on the other hand the drive member 36 may be designed to have no lost motion in a circumferential sense so that the friction forces generated by the friction damper 27 occur immediately any relative rotation of the flywheel masses occurs. Alternatively, one or more of the plates 34,35 may have a designed amount of circumferential lost motion built into its splining arrangements so that its frictional effect may be delayed and it will only become operative after a predetermined amount of relative rotation between the input and output masses. Thus the friction damping characteristics of the friction damper 27 can be tuned to each particular vehicular application of the twin mass flywheel.

The elastomer layer 40 used to bond the drive member 36 to the side plate 32 is resilient and physically isolates the drive member 36 from the side plate both axially and torsionally to reduce the transmission of vibrations between the drive member 36 and the side plate 32. This in turn reduces the likelihood of squeaks or squeals being generated when the friction damping means 27 is in operation, compared with a situation in which the drive member 36 is rigidly connected to the side plate 32, for example by welding, or where the drive member is formed integrally with the side plate.

The elastomer layer 40 may be a wet laid elastomer or may be EPDM Rubber or a silicone elastomer bonded to the drive member 36 and the side plate 32. The elastomer layer 40 may also be injected between the flange 37of the drive member and the flange 38 of the side plate 32.

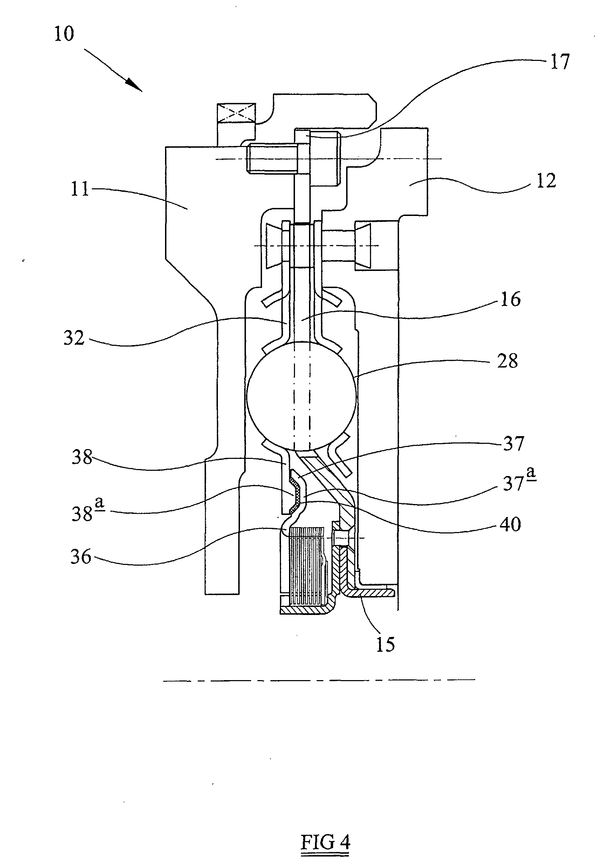

It will be appreciated by those skilled in the art, that other methods of drivingly connecting the drive member 36 with the side plate 32 through a resilient means in order to isolate the drive member 36 from the side plate 32 could be used. For example, the drive member 36 and the side plate 32 could have inter-engaging drive formations and a resilient means can be provided between the drive formations on the drive member and the drive formations on the side plate in order to isolate the drive member from the side plate. As a particular example, figure 4 shows an arrangement in which the radial flange portion 38 of the side plate 32 is provided with a number of circumferentially spaced axial projections or bumps 38A which are received in complementary recesses or indentations 37A in the radial flange portion 37 of the drive member 36, with a layer of elastomer 40 in between. This arrangement provides for a mechanical drive between the drive member 36 and the side plate 32 and may be preferable where the expected torque loadings may overstress the elastomer.

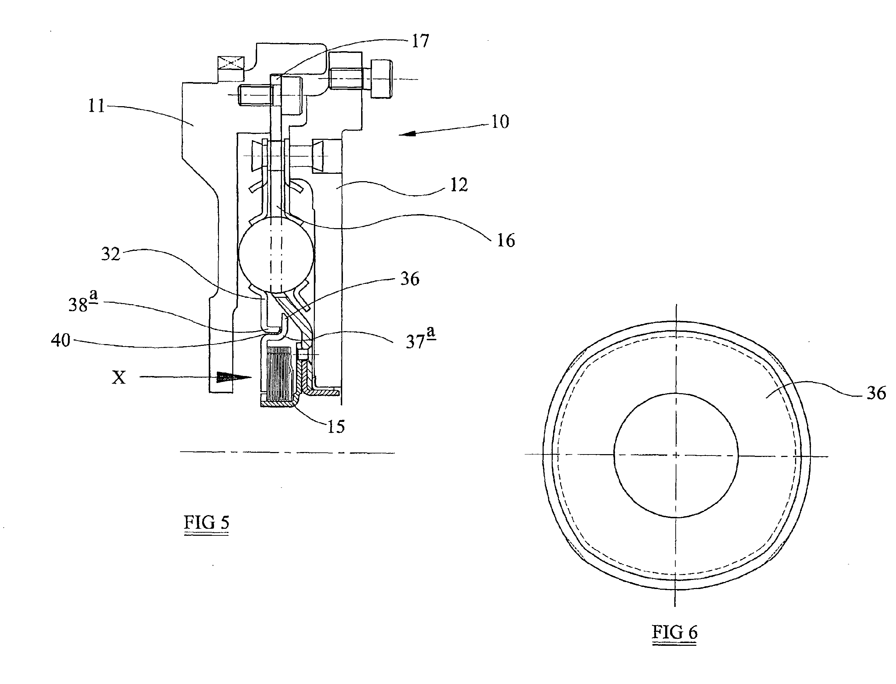

A further alternative arrangement for providing mechanical drive between the side plate 32 and the drive member 36 is shown in figures 5 and 6. In this embodiment, the drive member 36 has an axially extending flange portion 37A and the radially inner end of the side plate 32 has a corresponding axial flange portion 38A, which overlies the axial flange portion 37A of the drive member 36. As can be seen best from Figure 6, which shows an axial view of the drive member on its own, the axial flange portions 37A and 38A have complementary non-circular profiles so that torque can be transmitted mechanically between the drive member 36 and the side plate 32. A layer of elastomer 40 is provided between the axial flange portions 37A, 38A of the drive member 36 and the side plate 32. The elastomer layer 40 may be bonded to the drive member 36 and the side plate 32.

Other arrangements for drivingly interconnecting the drive member and the side plate through a resilient means will be apparent to those skilled in the art. For example, the drive member 36 and side plate 32 could have meshing gear formations with a layer of elastomer between them.

The spacing rivets 33 extend through circumferentially extending slots 46 in the flange 16. Thus spacing rivets 33 also act as ultimate rotation stops by abutment with the ends 47 of the slots 46 after a pre-determined amount of relative rotation of the flywheel masses.

A clutch cover 48 is mounted on the output flywheel mass 12 by set screws 49 and carries, in a conventional manner a pressure plate 50 and a diaphragm spring 51 for clamping a clutch driven plate 52 between the pressure plate 50 and the output mass 12. In a conventional manner the driven plate 52 is provided with a drive hub 54 for connection with a gearbox input shaft 55. Details of the clutch cover 48, pressure plate 50, diaphragm spring 51, driven plate 52 and gearbox input shaft 55 have been omitted from figures 3 and 4 for clarity.

In an alternative arrangement, not shown, the clutch cover 48 can be riveted onto the output flywheel mass 12.

A tubular prop, crank prop or support member 56 is located axially between an end 57 of the second hub member 15B and the input flywheel mass 11 to provide axial support for the radially inner portion of the output flywheel mass 12. A principle function of the support member is to take up the gap between the input and output flywheel masses, so that any deflection which occurs between the two masses due to clutch release loading is eliminated. The support member 56 resists the thrust loading transferred to it via the release load path through the twin mass flywheel.

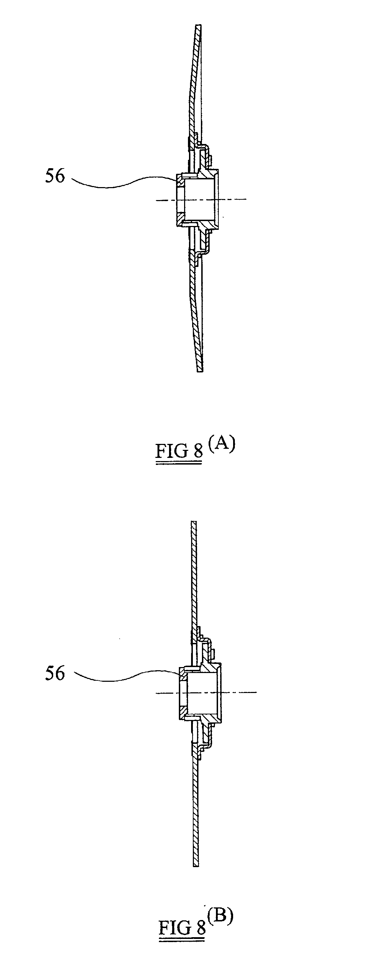

The support member 56 is ideally sized such that zero or minimum gap is left between the input flywheel mass and the output flywheel mass and also no deflection is placed on the various components in the opposite direction when loaded. This may be achieved by providing a controlled cone angle on the flywheel flange (cf Figure 8a). During installation of the two halves of the flywheel (primary and secondary) the coning of the flange is taken out by the deflection of the flange over the support member 56 in order that the correct pre-load over the support member is then achieved (Figure 8b).

The axial support provided by the support member increases the axial stiffness of the flywheel making actuation of the clutch more efficient. The support member 56 also acts to physically couple the input and output flywheels 11 and 12, which reduces vibrations at the clutch pedal. The support member 56 can be made of any suitable material such as steel or plastics and preferably is arranged so as to be under a constant compression loading between the second hub member 15B and the input mass 11. The support member 56 has been omitted from figures 4 and 5 for clarity.

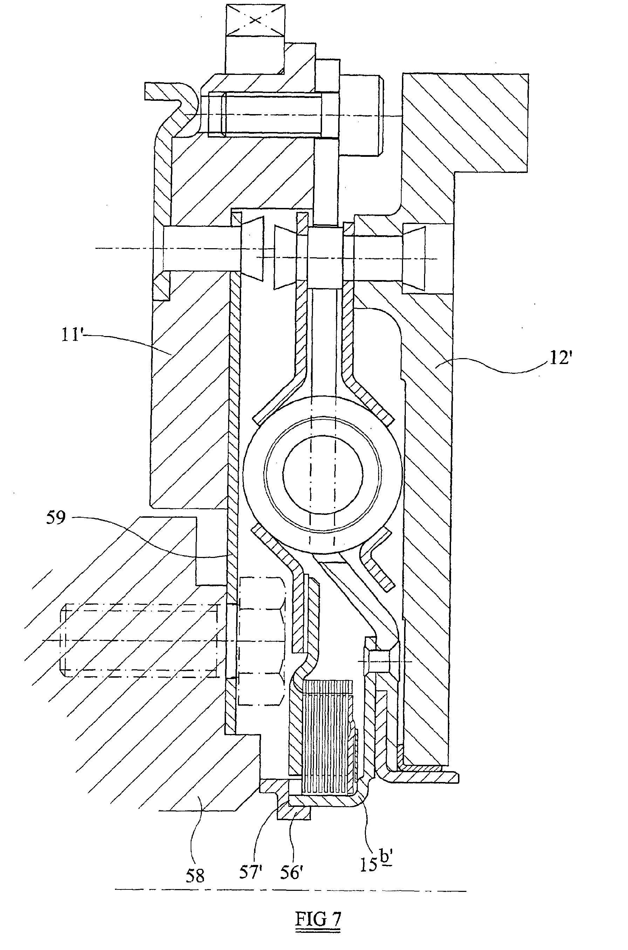

In an alternative embodiment shown in figure 7, the input mass 11' is connected to the crankshaft 58 by means of a flexi-plate 59 and the support member 56' is located between the end 57' of the second hub portion 15B' and the crankshaft 58.

Rather than being provided as a separate component as described above, it will be appreciated that the support member 56, 56' could be provided as an extension of one or more components of the flywheel 10 or an engine to which the flywheel is to be fitted. For example, the support member could be in the form of an extension to the hub 15, the input mass 11 or even the crankshaft 58.

It will be appreciated that the twin mass flywheels described above are constructed in first and second sub-assemblies. The first sub-assembly comprising the input flywheel mass 11 with its associated starter ring 11A. The remainder of the twin mass flywheel comprises a second sub-assembly in the form of flange 16, torsional damper 13, friction damper 27, axial hub 15, main bearing 14, output flywheel mass 12, clutch cover 48, diaphragm spring 51, pressure plate 50, and driven plate 52. This entire second assembly can be mounted on the first assembly simply using the bolts 19, six of which are provided as shown in figure 2. This ability to mount the large second sub-assembly onto the input flywheel mass 11 using six fastening bolts 19 greatly facilitates the assembly of the units on the vehicle production line and also subsequent maintenance of the vehicle, as the second assembly can be provided as a pre-assembled balanced unit. Where required, through holes are provided in the outer peripheral portion of the output mass 12 to provide access to the bolts 19 to enable the second assembly to be mounted to the first assembly.

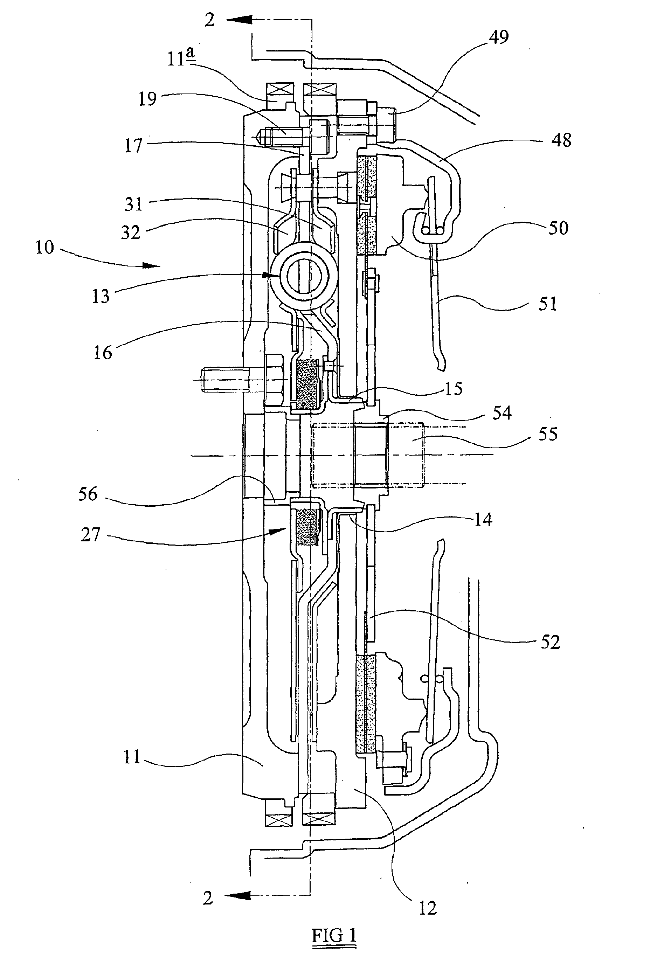

In the embodiment shown in figures 1 and 3, a ring gear 60 is mounted to the outer peripheral edge of the flange 16. The ring gear 60 may be a starter ring gear or may be used to drive a toothed belt such a camshaft drive belt or a belt for driving ancillary devices such as a power steering or air-conditioning pump. Typically in known twin mass flywheels, the ring is mounted to the input flywheel. However, this arrangement can be difficult to manufacture. Mounting a ring gear 60 to the flange 16 has the advantage that the ring gear 60 can be easily welded or otherwise attached to the substantially planar flange 16, which preferably is made from steel.

## Claims

1. A twin mass flywheel of the type specified, **characterised in that** the flywheel is further provided with support means (56,56') to resist axial deflection of an inner diameter portion of the output flywheel in a direction towards the input flywheel.

2. A twin mass flywheel as claimed in claim 1, **characterised in that** the support means (56,56') is adapted to resist axial deflection of the hub (15) in a direction towards the input flywheel.

3. A twin mass flywheel as claimed in claim 2, **characterised in that** the support means (56,56') is adapted to be located axially between a portion of the hub (15) or another component fixed axially relative to the hub (15), and the input flywheel or a component fixed axially relative to the input flywheel.

4. A twin mass flywheel as claimed in claim 2 or claim 3, **characterised in that** the support means (56,56') is located axially between the hub (15) and the input flywheel.

5. A twin mass flywheel as claimed in claim 2 or claim 3, **characterised in that** the support means (56,56') is adapted to be located axially between the hub (15), or another component fixed axially relative to the hub (15), and the crankshaft (58) of an associated engine to which the flywheel is to be fitted.

6. A twin mass flywheel as claimed in any one of claims 2 to 5, **characterised in that** the support means (56,56') comprises an annular support member or prop.

7. A twin mass flywheel as claimed in any previous claim, **characterised in that** the support means (56,56') is configured so as to be subjected to a compression loading at least some of the time during use.

8. A twin mass flywheel as claimed in any previous claim, **characterised in that** the support means (56,56') is manufactured from a metal, such as steel, or from a plastics material or a combination thereof.

9. A twin mass flywheel as claimed in any previous claim, **characterised in that** the support means (56,56') is provided as an extension of a component of the flywheel, such as the hub (15) or the input mass (11).

10. A twin mass flywheel as claimed in any previous claim when mounted to an associated engine, **characterised in that** the support means (56,56') comprises an extension of a component of the engine.

11. A twin mass flywheel as claimed in claim 10, **characterised in that** the support means (56,56') is provided as an extension to the crankshaft (58) of the engine.
